# FASCICULE DE BREVET EUROPEEN

(11) **EP 1 323 593 B1**
(45) Date de publication et mention de la délivrance du brevet: **09.02.2005**
(21) Numéro de dépôt: 02293190.1
(22) Date de dépôt: 20.12.2002
(51) Int. Cl.: B60R 21/02, B62D 25/14

(54) **Habitacle de véhicule automobile, équipé de moyens de protection contre des chocs**
Fahrzeuginnenraum mit Kollisionschutzelementen ausgerüstet
Vehicle compartment equipped with protection means against collision

(30) Priorité: 31.12.2001 FR 0117076
(43) Date de publication de la demande: 02.07.2003
(73) Titulaire: Renault s.a.s., 92100 Boulogne Billancourt (FR)
(72) Inventeur: Pruvot, Hervé, 78170 La Celle Saint Cloud (FR)

(56) Documents cités:
- EP-A- 0 456 531
- EP-A- 1 057 717
- DE-A- 19 632 714
- US-B1- 6 305 733

## Description

La présente invention est relative à un habitacle de véhicule automobile et, plus particulièrement, à un tel habitacle équipé de moyens de protection contre des chocs.

Le document EP 0 456 531 A divulgue un habitacle selon le préambule de la revendication 1.

On a représenté à la tigure unique du dessin annexé à la présente demande de brevet une partie d'un habitacle de véhicule automobile, en coupe par un plan vertical parallèle à l'axe longitudinal du véhicule.

Sur cette figure le compartiment moteur du véhicule est repéré 1. Il est séparé de l'habitacle du véhicule par une cloison pare-feu 2, garnie d'une couche d'un matériau d'isolation phonique et/ou thermique 3, comme cela est classique.

La partie supérieure de la planche de bord 4 du véhicule est aussi représentée en coupe, au niveau où la coupe passe par une boîte à gants 5 accessible par un couvercle 6 articulé en 7 à son extrémité avant (dans le sens de progression normale du véhicule). Le couvercle est retenu en position de fermeture par un encliquetage 8 disposé à l'arrière de ce couvercle. Un ressort (non représenté) permet de maintenir temporairement le couvercle en position d'ouverture, après une rotation de ce couvercle dans le sens de la flèche f₁.

Une traverse 9 s'étend transversalement dans le véhicule, sous la partie supérieure de la planche de bord 4, pour supporter celle-ci et renforcer la structure du véhicule, et donc la sécurité des personnes se trouvant dans l'habitacle de celui-ci, comme cela est bien connu.

Comme cela est bien connu aussi, le véhicule comprend une boîte 10 dans laquelle sont réunis des fusibles, tels que celui référencé 11, de protection d'appareils électriques du véhicule, et éventuellement, des relais électriques ou électroniques tels que celui schématisé en 12, de commande de ces appareils électriques. Un connecteur 13 raccorde la boîte 10 aux appareils protégés et/ou commandés.

L'utilisateur du véhicule doit pouvoir accéder commodément à cette boîte, notamment pour vérifier l'état des fusibles et remplacer éventuellement les fusibles consommés.

Pour ce but, comme décrit dans la demande de brevet français déposée ce jour par la demanderesse et intitulée "Dispositif de montage d'une boîte à fusibles dans un véhicule automobile", ci-après appelée demande de brevet précitée, la boîte à fusibles 10 est accessible, à travers la boîte à gants 5, après ouverture du couvercle 6 de cette boîte et dégagement manuel d'un volet 14 mobile ou amovible délimitant une paroi de fond de la boîte 5, comme représenté.

Le volet 14 peut être retenu par des encliquetages, schématisés en 15₁, 15₂, débrayables manuellement.

Bien entendu la boîte 10 doit être montée dans une position prédéterminée près du volet 14, pour pouvoir être facilement accessible, après retrait de ce volet, et éventuellement démontée pour une inspection.

A cet effet, comme décrit dans la demande de brevet précitée, on prévoit des moyens de montage 16 de la boîte 10, sur la traverse 9, prenant la forme d'une bande métallique 16 conformée, à une extrémité, pour être fixée à la traverse 9 et, à l'autre extrémité, pour enserrer et pincer la boîte 10. C'est ainsi que cette extrémité peut prendre une forme en U, représentée au dessin, enveloppant trois faces de la boîte 10 avec, éventuellement, interposition d'une couche 17 d'un produit comblant un espace séparant la bande de la boîte, de type insonorisant, par exemple.

L'extrémité opposée de la bande 16 peut être fixée à la traverse 9 par tout moyen tel que celui schématisé en 18 à la figure : vis, rivet, ou collier, soudure, etc...

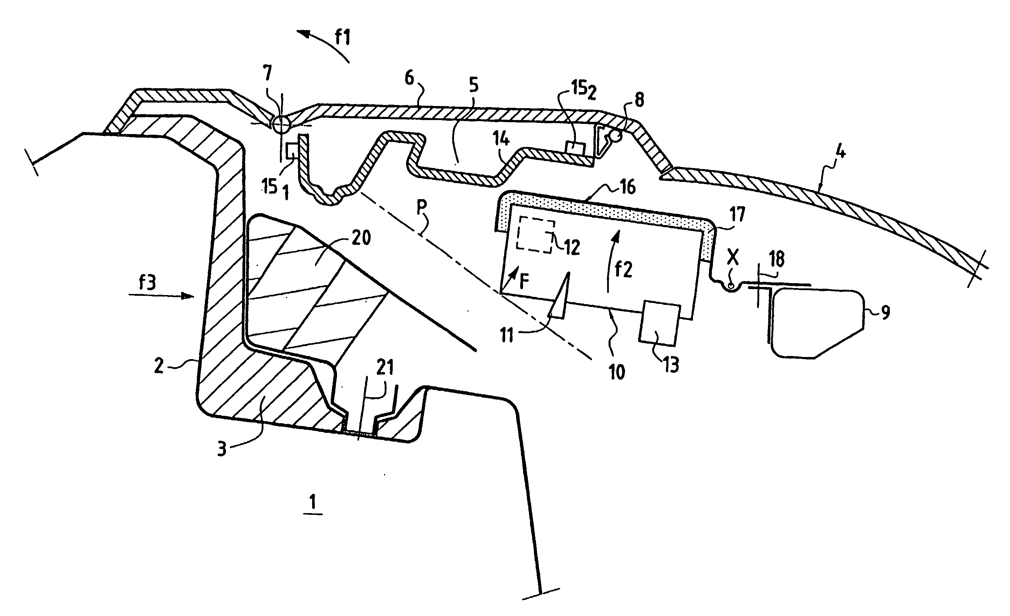

Il apparaît sur la figure 1 que la boîte à fusibles 10 est disposée dans l'espace qui sépare la cloison pare-feu 2 de la traverse 9. Cette situation, pour avantageuse qu'elle soit au regard des problèmes posés et résolus par l'invention décrite dans la demande de brevet précitée, n'est pas sans inconvénients.

En effet, en cas de choc frontal du véhicule contre un obstacle, diverses parties mécaniques du véhicule sont susceptibles de se déformer. C'est le cas, en particulier de la cloison pare-feu qui peut reculer dans le sens de la flèche f₃ jusqu'à percuter la boîte 10. Si celle-ci vient alors buter sur la traverse 9, elle lui transmet des efforts susceptibles de la déformer à son tour. Une telle déformation entraînerait un recul de la planche de bord, fixée sur la traverse 9 par des moyens non représentés, dans l'habitacle ce qui peut être très dangereux pour les occupants de cet habitacle.

La présente invention a précisément pour but de fournir un habitacle, du type décrit ci-dessus, équipé de moyens de protection des occupants de l'habitacle contre les conséquences décrites ci-dessus d'un choc frontal du véhicule sur un obstacle.

On atteint ce but de l'invention, ainsi que d'autres qui apparaîtront à la lecture de la description qui va suivre, avec un habitacle de véhicule automobile équipé de moyens de protection contre des chocs, ledit habitacle comprenant une planche de bord fixée sur une traverse, au-dessus de celle-ci, et au moins une boîte rigide montée sur ladite traverse dans un espace séparant celle-ci d'une cloison pare-feu isolant l'habitacle du compartiment moteur du véhicule, ledit habitacle étant remarquable en ce que lesdits moyens de protection comprennent au moins un sabot monté sur ladite cloison de manière à pousser ladite boîte hors dudit espace, lorsqu'une déformation sous choc de ladite cloison entraîne ledit sabot contre ladite boîte.

Comme on le verra plus loin en détails, les moyens de protection de l'habitacle suivant l'invention ont pour effet d'établir un découplage sensible, vis-à-vis de chocs, entre la cloison pare-feu et la traverse. Grâce à ce découplage, la géométrie de la traverse n'est pas modifiée par transmission d'énergie mécanique venue de la cloison choquée et déformée. La planche de bord portée par la traverse reste alors à sa place, au bénéfice de la protection des passagers de l'habitacle, et ceci au moins dans les situations de choc les plus nombreuses, pour lesquelles l'énergie mécanique à absorber ne dépasse pas les capacités d'absorption des moyens de protection suivant l'invention.

Suivant d'autres caractéristiques de la présente invention :
- la boîte est portée par des moyens de support configurés de manière à définir un axe autour duquel tourne la boîte, sous la poussée du sabot,
- ledit axe est situé entre ladite boîte et ladite traverse,
- la planche de bord est conçue pour se déformer ou s'ouvrir sous la poussée de ladite boîte, chassée de sa position initiale par le sabot.

D'autres caractéristiques et avantages de la présente invention apparaîtront à la lecture de la description qui va suivre et à l'examen du dessin annexé où la figure unique représente schématiquement une partie de l'habitacle suivant l'invention, cette figure étant déjà partiellement décrite ci-dessus.

C'est pourquoi on se limitera, dans la suite, à la description de la structure et du fonctionnement des moyens de protection incorporés à cet habitacle, dont d'autres caractéristiques font l'objet de la demande de brevet précitée.

Ces moyens de protection comprennent essentiellement un sabot 20 monté sur la cloison 2 par le moyen de vis ou de boulons, d'axes parallèles à l'axe 21, par exemple.

Le sabot 20 présente une section droite généralement triangulaire, complémentaire de celle d'une partie adjacente de la couche 3 de matériau d'isolation contre laquelle il est accolé pour constituer un moyen de fixation de cette couche 3 sur la cloison 2.

Le sabot 20 est structuré pour pouvoir absorber de l'énergie mécanique lorsqu'il subit un écrasement, pour un but que l'on expliquera plus loin. C'est ainsi que, comme représenté sur la figure, sa structure est du type "nid d'abeille", composée d'éléments de parois internes agencés de manière à pivoter les uns par rapport aux autres en absorbant de l'énergie mécanique quand le sabot est pincé entre la cloison 2, supposée déformée, et la traverse 9, comme on le verra plus loin.

Par ailleurs la bande métallique 16 du support de la boîte 10 sur la traverse 9 est pliée, entre cette traverse et cette boîte, de manière à définir un axe X autour duquel la boîte 10 peut tourner sous une poussée appliquée par le sabot 20.

On décrit maintenant le fonctionnement des moyens exposés ci-dessus, de protection contre les chocs de l'habitacle suivant l'invention.

En cas de choc frontal du véhicule contre un obstacle, des efforts généralement dirigés selon la flèche f₃ sont transmis à la cloison 2 qui peut alors se déformer en déplaçant le sabot 20, dans le sens de cette flèche, jusqu'à venir en contact, dans le plan P, avec une arête de la boîte à fusibles 10, par exemple, en appliquant alors à la boîte une force F d'axe écarté de l'axe X, cette force F provoquant la rotation de la boîte 10 autour de cet axe X dans le sens de la flèche f₂. Ce faisant la boîte, chassée de sa position initiale, vient percuter le volet 14 qui peut se soulever et entraîner aussi l'ouverture du couvercle 6 adjacent de la boîte à gants 5, de manière à permettre à la boîte à fusibles 10 de se dégager de la trajectoire du sabot 20. Celui-ci peut alors poursuivre sa course jusqu'à la traverse 9 sur laquelle il s'écrase en absorbant de l'énergie qui aurait pu, autrement, provoquer une déformation de la traverse 9 et une avancée de la planche de bord 4 dans l'habitacle, dangereuse pour ses occupants.

Il apparaît ainsi que l'invention permet bien d'atteindre le but fixé, à savoir, dans nombre de situations de chocs frontaux, protéger efficacement les occupants de l'habitacle.

Bien entendu l'invention n'est pas limitée au mode de réalisation décrit et représenté qui n'a été donné qu'à titre d'exemple. C'est ainsi que les moyens de protection suivant l'invention peuvent coopérer avec toute boîte ou boîtier monté sur la traverse 9, que ceux-ci contiennent des fusibles, un calculateur, ou tout autre organe ou appareil utile dans un véhicule automobile.

De même la partie supérieure, ou coiffe, de la planche de bord, pourrait être munie, au droit d'une telle boîte ou boîtier, de couvercles amovibles ou de parties frangibles susceptibles de sauter verticalement sous la poussée de la boîte ou boîtier, en lieu et place du volet 14 et du couvercle 6 de la boîte à gants représentée.

L'ensemble de la planche de bord pourrait même être conçu pour se déplacer verticalement, donc sans reculer ce qui serait dangereux pour les passagers.

## Revendications

1. Habitacle de véhicule automobile équipé de moyens de protection contre des chocs, ledit habitacle comprenant une planche de bord (4) fixée sur une traverse (9), au-dessus de celle-ci, et au moins une boîte rigide (10) montée sur ladite traverse (9) dans un espace séparant celle-ci d'une cloison pare-feu (2) isolant l'habitacle du compartiment moteur du véhicule, ledit habitacle étant **caractérisé en ce que** lesdits moyens de protection comprennent au moins un sabot (20) monté sur ladite cloison (2) de manière à pousser ladite boîte (10) hors dudit espace, lorsqu'une déformation sous choc de ladite cloison (2) entraîne ledit sabot (20) contre ladite boîte (10).

2. Habitacle conforme à la revendication 1, **caractérisé en ce que** ladite boite (10) est portée par des moyens de support (16) configurés de manière à définir un axe (X) autour duquel tourne la boîte (10), sous la poussée du sabot (20).

3. Habitacle conforme à la revendication 2, **caractérisé en ce que** ledit axe (X) est situé entre ladite boîte (10) et ladite traverse (9).

4. Habitacle conforme à l'une quelconque des revendications 1 à 3, **caractérisé en ce que** la planche de bord (4) est conçue pour se déformer ou s'ouvrir sous la poussée de ladite boîte (10), chassée de sa position initiale par ledit sabot (20).

5. Habitacle conforme à l'une quelconque des revendications 1 à 4, **caractérisé en ce que** ledit sabot (20) est structuré pour absorber de l'énergie mécanique par écrasement de sa structure contre ladite traverse (9).

6. Habitacle conforme à l'une quelconque des revendications 1 à 5, **caractérisé en ce que** ledit sabot (20) fait partie de moyens de fixation d'une couche (3) d'un matériau d'isolation acoustique et/ou thermique appliquée contre ladite cloison (2).

## Patentansprüche

1. Fahrgastzelle eines Automobils, welche mit Mitteln zum Schutz gegen einen Aufprall ausgestattet ist, wobei die Fahrgastzelle ein Instrumentenbrett (4) umfasst, das an einem Querträger (9) über diesem befestigt ist, und mindestens ein steifes Gehäuse (10), das an dem Querträger (9) in einem Raum montiert ist, welcher dieses von einer Flammenschutz-Trennwand (2) trennt, welche die Fahrgastzelle vom Motorraum des Fahrzeugs trennt, wobei die Fahrgastzelle **dadurch gekennzeichnet ist, dass** die Schutzmittel mindestens einen Schuh (20) aufweisen, der an der Trennwand (2) derart montiert ist, um das Gehäuse (10) außerhalb des Raumes zu stoßen, wenn die Verformung unter einem Aufprall der Trennwand (2) den Schuh (20) gegen das Gehäuse (10) bewegt.

2. Fahrgastzelle nach Anspruch 1, **dadurch gekennzeichnet, dass** das Gehäuse (10) durch Trägermittel (16) getragen wird, welche derart ausgebildet sind, dass sie eine Achse (X) definieren, um welche sich das Gehäuse (10) unter der Druckkraft des Schuhs (20) dreht.

3. Fahrgastzelle nach Anspruch 2, **dadurch gekennzeichnet, dass** die Achse X zwischen dem Gehäuse (10) und dem Querträger (9) angeordnet ist.

4. Fahrgastzelle nach irgendeinem der Ansprüche 1 bis 3, **dadurch gekennzeichnet, dass** das Instrumentenbrett (4) konzipiert ist, um sich zu verformen oder sich zu öffnen unter der Druckkraft des Gehäuses (10), welches aus einer Ausgangsstellung durch den Schuh (20) gestoßen bzw. geschleudert wird.

5. Fahrgastzelle nach einem der Ansprüche 1 bis 4, **dadurch gekennzeichnet, dass** der Schuh (20) strukturiert ist, um mechanische Energie durch Stauchung seiner Struktur gegen den Querträger (9) zu absorbieren.

6. Fahrgastzelle nach irgendeinem der Ansprüche 1 bis 5 , **dadurch gekennzeichnet, dass** der Schuh (20) einen Teil der Befestigungsmittel einer Schicht (3) eines akustischen Isolationsmaterials und/oder thermischen Isolationsmaterial bildet bzw. ist, das gegen die Trennwand (2) angelegt ist.

## Claims

1. A passenger space of an automobile vehicle equipped with means for protecting against impacts, this passenger space comprising a dashboard (4) secured on a crossbar (9), above the latter, and at least one rigid box (10) mounted on the crossbar (9) in a space separating the latter from a fire wall (2) isolating the passenger space from the engine compartment of the vehicle, this passenger space being **characterised in that** the protection means comprise at least one block (20) mounted on the wall (2) so as to push the box (10) out of the space when an impact-generated deformation of the wall (2) entrains the block (20) against this box (10).

2. A passenger space as claimed in claim 1, **characterised in that** the box (10) is borne by support means (16) configured to define an axis (X) about which the box (10) rotates under the thrust of the block (20).

3. A passenger space as claimed in claim 2, **characterised in that** this axis (X) is situated between the box (10) and the crossbar (9).

4. A passenger space as claimed in any one of claims 1 to 3, **characterised in that** the dashboard (4) is designed to be deformed or to open under the thrust of the box (10) moved from its initial position by the block (20).

5. A passenger space as claimed in any one of claims 1 to 4, **characterised in that** the block (20) is structured to absorb mechanical energy by crushing of its structure against the crossbar (9).

6. A passenger space as claimed in any one of claims 1 to 5, **characterised in that** the block (20) forms part of means for securing a layer (3) of a soundproofing and/or thermal insulating material applied to the wall (2).
